# EUROPÄISCHE PATENTSCHRIFT

(11) **EP 2 569 592 B1**
(45) Veröffentlichungstag und Bekanntmachung des Hinweises auf die Patenterteilung: **10.01.2018**
(21) Anmeldenummer: 11715918.6
(22) Anmeldetag: 20.04.2011
(51) Int. Cl.: G01B 5/012, F16L 37/086

(54) **TASTKOPF FÜR EIN KOORDINATENMESSGERÄT ZUM BESTIMMEN VON RAUMKOORDINATEN AN EINEM MESSOBJEKT**
PROBE FOR A COORDINATE MEASURING DEVICE FOR DETERMINING THE SPACE COORDINATES ON A MEASUREMENT OBJECT
SONDE POUR UN APPAREIL DE MESURE DE COORDONNÉES SERVANT À LA DÉTERMINATION DE COORDONNÉES DANS L'ESPACE SUR UN OBJET À MESURER

(30) Priorität: 07.05.2010 DE 102010020654
(43) Veröffentlichungstag der Anmeldung: 20.03.2013
(73) Patentinhaber: Carl Zeiss Industrielle Messtechnik GmbH, 73447 Oberkochen (DE)
(72) Erfinder: BRENNER, Kurt, 74589 Satteldorf (DE); JENISCH, Walter, 89520 Heidenheim (DE)
(74) Vertreter: Witte, Weller & Partner Patentanwälte mbB
(86) Internationale Anmeldenummer: PCT/EP2011/056305
(87) Internationale Veröffentlichungsnummer: WO 2011/138170

(56) Entgegenhaltungen:
- EP-A1- 0 856 377
- EP-A2- 0 392 660
- AT-B- 397 137
- US-A- 4 349 946
- US-A1- 2004 149 057

## Beschreibung

Die vorliegende Erfindung betrifft einen Tastkopf für ein Koordinatenmessgerät zum Bestimmen von Raumkoordinaten an einem Messobjekt, mit einem Kupplungsteil mit einem Haltezapfen, an dem ein Tastwerkzeug lösbar angeordnet ist, sowie ein Tastwerkzeug mit zumindest einem Taststift zum Antasten des Messobjekts und mit einem Drehteller, der dazu ausgebildet ist, über den Haltezapfen in einer von mehreren definierten Drehwinkelpositionen an das Kupplungsteil angekoppelt zu werden.

Ein Tastkopf und ein Tastwerkzeug dieser Art sind aus EP 0 856 377 A1 bekannt.

Koordinatenmessgeräte werden typischerweise verwendet, um geometrische Abmessungen und/oder die Form von Werkstücken zu bestimmen. In der Regel besitzt das Koordinatenmessgerät einen Messkopf, der relativ zu dem Werkstück (nachfolgend Messobjekt) bewegt werden kann. Abhängig von der Position des Messkopfes relativ zum Werkstück werden Raumkoordinaten bestimmt, die die Position definierter Messpunkte an dem Werkstück innerhalb eines Messvolumens repräsentieren. Wenn man für eine Vielzahl von Messpunkten eine entsprechende Vielzahl von Raumkoordinaten bestimmt, kann man anhand der Raumkoordinaten die geometrische Abmessungen und/oder die Form des Messobjekts überprüfen.

In vielen Fällen besitzt der Tastkopf des Koordinatenmessgerätes ein Tastwerkzeug, mit dem die gewünschten Messpunkte an dem Messobjekt berührt (angetastet) werden. Dementsprechend wird der Messkopf häufig als Tastkopf bezeichnet.

Das Tastwerkzeug besitzt häufig einen Stift mit einem freien Ende, an dem eine Tastkugel angeordnet ist. Die gewünschten Messpunkte am Messobjekt werden mit der Tastkugel angetastet. Um bei komplexen Werkstücken alle Messpunkte zu erreichen, ist es häufig wünschenswert, den Taststift in unterschiedlichen Orientierungen relativ zum Tastkopf zu halten. Darüber hinaus ist es häufig wünschenswert, Tastwerkzeuge mit unterschiedlichen Taststiften oder Taststiftkombinationen an einem Tastkopf zu verwenden, um alle gewünschten Messpunkte optimal zu erreichen.

DE 101 14 126 A1 offenbart einen Tastkopf mit einem auswechselbaren Tastwerkzeug. Das Tastwerkzeug besitzt einen L-förmig abgewinkelten Taststift, der in unterschiedlichen Drehwinkelpositionen an dem Tastkopf befestigt werden kann. Ein Drehteller des Tastwerkzeugs ist über eine kinematische Dreipunktlagerung in einer definierten Drehwinkelposition an dem Tastkopf angeordnet. Um die Drehwinkelposition zu verändern, wird der Drehteller über eine pneumatisch betätigte Schubstange aus der Dreipunktlagerung ausgerückt und anschließend an der Schubstange über einen im Tastkopf angeordneten Drehantrieb gedreht. Danach wird der Drehteller wieder in die definierte Dreipunktlagerung eingerückt. Die Drehwinkelposition des Drehtellers und des daran angeordneten Taststiftes wird mit einem Sensor bestimmt, der gleichzeitig auch Signale für den Drehantrieb liefert.

Um ein Herabfallen des Drehtellers beim Drehen des Taststiftes zu verhindern, ist der Drehteller durch eine hakenförmige Verbindung an der Schubstange befestigt. Eine weitere Sicherung des Drehtellers gegen Herabfallen beim Drehvorgang ist nicht offenbart.

Der bekannte Tastkopf ermöglicht die Verwendung von verschiedenen Tastwerkzeugen mit verschiedenen Orientierungen. Er eignet sich daher für flexible Messungen an komplexen Messobjekten. Nachteilig ist der im Tastkopf integrierte Drehantrieb und die pneumatisch betätigte Schubstange, die zusätzlich zu der Tastkopfsensorik benötigt werden, mit der man die Auslenkungen des Taststiftes relativ zum Tastkopf bestimmt. Der Drehantrieb erzeugt abhängig von der Häufigkeit seiner Nutzung Wärme, die sich ungünstig auf die Messgenauigkeit des Tastkopfes auswirken kann. Darüber hinaus führt die Integration der zusätzlichen Komponenten in dem Tastkopf zu einem höheren Gewicht.

Die Anmelderin der vorliegenden Erfindung hat in einer älteren (nachveröffentlichten) deutschen Patentanmeldung mit dem Aktenzeichen DE 10 2009 008 722.2 einen Tastkopf für ein Koordinatenmessgerät beschrieben, bei dem das Tastwerkzeug mit Hilfe von Messkraftgeneratoren und einem sogenannten Abrollvorsprung gedreht werden kann. Messkraftgeneratoren dienen bei sogenannten aktiven Tastköpfen Tastköpfen eigentlich dazu, eine definierte Antastkraft beim Antasten eines Messpunktes einzustellen und zu gewährleisten. Sie sind bei aktiven Tastköpfen prinzipbedingt vorhanden und werden nach der in DE 10 2009 008 722.2 beschriebenen Idee nun zusätzlich auch zum Drehen des Tastwerkzeugs verwendet. Dementsprechend vermeidet der Tastkopf aus DE 10 2009 008 722.2 die Nachteile des Tastkopfes aus DE 101 14 126 A1.

Der Drehteller des Tastwerkzeugs ist bei dem Tastkopf aus DE 10 2009 008 722.2 an einem Haltezapfen befestigt, über den der Drehteller für die Drehbewegung aus seiner kinematischen Lagerung ausgerückt werden kann. Im Testbetrieb hat sich gezeigt, dass die Befestigung des Drehtellers an dem Haltezapfen eine kritische Stelle ist. Wenn der Haltezapfen und/oder der Drehteller verschmutzt sind, ist es denkbar, dass die Befestigung des Drehtellers am Haltezapfen unzureichend ist und sich das Tastwerkzeug beim Drehen am Abrollvorsprung lösen und herabfallen kann. Dies führt üblicherweise zu einer Beschädigung des Tastwerkzeugs und/oder des Messobjekts.

DE 10 2005 043 454 B3 offenbart eine Wechseleinrichtung zur auswechselbaren Aufnahme eines Tastwerkzeugs an einem Koordinatenmessgerät, wobei ein Sicherungsseil dafür sorgen soll, dass das Tastwerkzeug auch im Fall einer Kollision nicht aus der Aufnahme herausfällt, obwohl sich das Tastwerkzeug zur Vermeidung von Beschädigungen bei einer Kollision aus der Aufnahme lösen kann. Ein ähnlicher Sicherungsmechanismus ist auch in der oben genannten älteren Anmeldung DE 10 2009 008 722.2 beschrieben. Der Sicherungsmechanismus bietet allerdings keinen Schutz gegen ein Herabfallen des Tastwerkzeugs, wenn die Befestigung des Tastwerkzeugs am Haltezapfen bereits unzureichend ist.

EP 0 523 906 A1 offenbart einen weiteren Tastkopf mit einem drehbaren Tastwerkzeug. Das Tastwerkzeug wird hier magnetisch an dem Tastkopf gehalten. Ein Haltemagnet zum Greifen des Tastwerkzeugs ist mit einer Welle verbunden, die mittels eines speziell dafür vorgesehenen Motors drehbar ist. Zum Verdrehen des Tastkopfes wird der Haltemagnet mitsamt der Welle vorgeschoben, so dass das Tastwerkzeug aus seiner Arbeitsposition ausgerückt wird. Mit Hilfe des Motors wird das Tastwerkzeug dann verdreht. Anschließend wird die Welle in ihre Ursprungsposition zurückgezogen, wobei sich der Haltemagnet von dem Tastwerkzeug löst. Auch hier ist keine besondere Sicherung gegen ein Herabfallen des Tastwerkzeugs beim Drehen vorgesehen.

Die eingangs genannte EP 0 856 377 A1 offenbart ein Verfahren und eine Vorrichtung zum Auswechseln von Bearbeitungsmodulen einer Koordinatenpositionierungsmaschine. Unter anderem ist ein Tastkopf mit einem Adapter gezeigt, an dem ein Tastwerkzeug angebracht werden kann. Das Tastwerkzeug wird mittels eines Verriegelungsmechanismus am Tastkopf befestigt, wobei die Verbindung über einen Adapter mit einem Kugelzapfen und einer Aufnahmescheibe erfolgt. Mehrere Aufnahmen in Form von Kugeln halten das Tastwerkzeug in definierten Drehwinkeln zum Tastkopf. Der Verriegelungsmechanismus weist eine definierte Verriegelungs- und eine Freigabeposition auf.

US 2004/0149057 A1 offenbart einen weiteren Tastkopf, an dem ein Taststift über einen Freigabemechanismus beweglich angeordnet werden kann, wobei der Taststift um zwei unabhängige Achsen in einer Vielzahl von Raumrichtungen bewegt werden kann. Der Freigabemechanismus hat eine Verriegelungsposition, in der der Taststift fest mit dem Tastkopf verbunden ist, und eine Freigabeposition, in der sich der Taststift relative zum Taskkopf verstellen kann.

US 4,349,946 offenbart ein Werkzeugsverbindungsmechanismus, mit dem ein Werkzeug, bpsw. ein Taststift, an eine Werkzeugmaschine gekoppelt werden kann. Unter anderem wird einen elektrischer Schaltkreis offenbart, der unterbrochen wird, falls sich Teile des Werkzeugsverbindungsmechanismus in einer falschen Position befinden. Der elektrische Schaltkreis wird ferner verwendet, um einen Stellmotor anzusteuern.

Vor diesem Hintergrund ist es eine Aufgabe der vorliegenden Erfindung, einen Tastkopf der eingangs genannten Art anzugeben, bei dem das Tastwerkzeug insbesondere beim Drehen besser gegen Beschädigungen durch Herabfallen geschützt ist. Vorzugsweise soll der neue Tastkopf ohne spezielle Drehantriebe zum Drehen des Tastwerkzeugs auskommen, wenngleich die Erfindung darauf nicht beschränkt ist.

Diese Aufgabe wird gemäß einem Aspekt der Erfindung durch ein Tastwerkzeug nach Anspruch 1 gelöst, wonach der Drehteller einen Detektor aufweist, und wobei der Detektor ein Signal erzeugt, das für die Verriegelungsposition und/oder die Freigabeposition repräsentativ ist.

Gemäß einem weiteren Aspekt wird diese Aufgabe durch einen Tastkopf der eingangs genannten Art gelöst, mit einem Tastwerkzeug der zuvor beschriebenen Art.

Der neue Tastkopf und das neue Tastwerkzeug besitzen einen Verriegelungsmechanismus, der an dem Drehteller des Tastwerkzeugs angeordnet ist. Die Befestigung des Tastwerkzeugs am Tastkopf wird also zumindest teilweise vom Drehteller bewirkt und obliegt nicht allein der Drehtelleraufnahme im Tastkopf. Des Weiteren besitzt der Drehteller einen Detektor, mit dessen Hilfe die Funktion des Verriegelungsmechanismus überwacht wird. Der Detektor erzeugt ein Signal, das für die Verriegelungsposition und/oder die Freigabeposition des Verriegelungselements repräsentativ ist. Dementsprechend ist das Signal dazu ausgebildet, die jeweilige Position des Verriegelungselements anzuzeigen. Vorzugsweise wird das Signal des Detektors im Tastkopf ausgewertet, um eine unzureichende Befestigung des Drehtellers an dem Haltezapfen frühstmöglich zu erkennen und in Abhängigkeit davon ein Warnsignal an den Bediener der Maschine auszugeben und/oder einen Betriebsstopp auszulösen. Es ist ferner bevorzugt, wenn eine Auswerte- und Steuereinheit, die wahlweise in dem Tastkopf oder separat von dem Tastkopf angeordnet sein kann, in Abhängigkeit von dem Signal des Detektors ein Ausrücken des Drehtellers und gegebenenfalls eine damit verbundene Änderung der Drehwinkelposition verhindert.

Der neue Tastkopf und das neue Tastwerkzeug besitzen also einen speziellen Detektor, der eine Überwachung des Verriegelungsmechanismus mit Hilfe eines speziellen Überwachungssignals ermöglicht. Alternativ oder ergänzend hierzu könnte der Verriegelungsmechanismus fehlersicher ausgebildet sein, beispielsweise durch eine mechanische Konstruktion, die eine Befestigung des Tastwerkzeugs mit unzureichender Verriegelung ausschließt. Die Verwendung eines Detektors zum Erzeugen eines speziellen Überwachungssignals vereinfacht allerdings die mechanische Konstruktion der Schnittstelle zwischen Drehteller und Kupplungsteil. Darüber hinaus ermöglicht der Detektor, Veränderungen an der mechanischen Schnittstelle zwischen Drehteller und Kupplungsteil zu berücksichtigen. Veränderungen, die Auswirkung auf die Funktion des Verriegelungsmechanismus haben und die erst im Betrieb des Koordinatenmessgerätes auftreten, können etwa Folge von Verschmutzung, Verschleiß und/oder Fehlbedienung sein. Der Detektor ermöglicht eine sehr zuverlässige und kostengünstige Überwachung der Verriegelungsfunktion. Darüber hinaus ist die Integration des Detektors in dem Tastwerkzeug von Vorteil, um eine Nachrüstung an älteren Koordinatenmessgeräten zu vereinfachen.

Wie nachfolgend anhand von bevorzugten Ausführungsbeispielen erläutert wird, kann der neue Tastkopf vorteilhaft ohne speziellen Drehantrieb zum Drehen des Tastwerkzeugs realisiert werden, indem der Tastkopf einen oder mehrere Messkraftgeneratoren verwendet, um mit Hilfe eines Abrollvorsprungs eine gewünschte Drehbewegung zu erzeugen. Der im Tastwerkzeug integrierte Detektor zum Überwachen eines im Tastwerkzeug integrierten Verriegelungselements kann jedoch vorteilhaft auch bei Tastköpfen eingesetzt werden, die einen speziellen Drehantrieb zum Drehen des Tastwerkzeugs besitzen.

Die oben genannte Aufgabe ist daher vollständig gelöst.

In einer bevorzugten Ausgestaltung besitzt der Drehteller zumindest einen Identifikationsschaltkreis und das Kupplungsteil besitzt einen Sensor zum Auslesen des zumindest einen Identifikationsschaltkreises.

Ein Identifikationsschaltkreis im Sinne dieser Ausgestaltung ist ein - vorzugsweise elektronischer - Schaltkreis, der eine Kodierung enthält, die den Drehteller identifiziert. Ein bevorzugter Identifikationsschaltkreis enthält einen Speicher, in dem die Kodierung digital gespeichert ist. Prinzipiell könnte der Identifikationsschaltkreis aber eine mechanische Kodierung aufweisen, die mechanisch, elektrisch und/oder optisch mit einem geeigneten Sensor im Kupplungsteil ausgelesen wird. Die bevorzugte Ausgestaltung besitzt den Vorteil, dass der Tastkopf die Identität und Eigenschaften des Tastwerkzeugs einfach und automatisiert erkennen kann, um beispielsweise die Anzahl der möglichen Drehwinkelpositionen und/oder das Vorhandensein des neuen Detektors zu bestimmen.

In einer weiteren Ausgestaltung ist der Detektor dazu ausgebildet, das Auslesen des Identifikationsschaltkreises durch den Sensor in Abhängigkeit von der Verriegelungsposition und/oder der Freigabeposition zu verhindern.

Diese Ausgestaltung ermöglicht eine sehr einfache, kostengünstige und platzsparende Realisierung des Detektors, indem der Detektor die von dem Identifikationsschaltkreis ohnehin gelieferte Kodierung nutzt, um das Überwachungssignal für den Verriegelungsmechanismus zu erzeugen. In einem bevorzugten Ausführungsbeispiel verhindert der Detektor das Auslesen des Identifikationsschaltkreises, wenn sich das Verriegelungselement nicht in seiner Verriegelungsposition befindet, also in einer wie auch immer gearteten Freigabeposition ist. Das "Signal" des Detektors besteht in diesem Fall darin, dass der Sensor kein Signal vom Identifikationsschaltkreis erhält. Der Detektor kann daher ein passives Element sein, das keinen zusätzlichen Wärmeeintrag in dem Tastkopf zur Folge hat.

In einer weiteren Ausgestaltung beinhaltet der Detektor einen elektrischen Schalter, der elektrisch in Reihe zu dem zumindest einen Identifikationsschaltkreis angeordnet ist.

Diese Ausgestaltung ermöglicht eine sehr einfache, kostengünstige und zuverlässige Realisierung des Detektors. Der elektrische Schalter ist vorzugsweise ein mechanisch betätigter Mikroschalter, der nur dann geschlossen ist, wenn sich das Verriegelungselement in seiner Verriegelungsposition befindet. Ein solcher Schalter lässt sich in dem geringen Bauraum eines Drehtellers gut integrieren und er kann das Auslesen des Identifikationsschaltkreises sehr einfach verhindern.

In einer weiteren Ausgestaltung besitzt der Drehteller eine Vielzahl von Identifikationsschaltkreisen, wobei jeweils ein Identifikationsschaltkreis für eine der definierten Drehwinkelpositionen repräsentativ ist, und wobei der Detektor dazu ausgebildet ist, das Auslesen der Identifikationsschaltkreise durch den Sensor in Abhängigkeit von der Verriegelungsposition und/oder der Freigabeposition zu verhindern.

Vorzugsweise ist in dieser Ausgestaltung für jede definierte Drehwinkelposition ein individueller Identifikationsschaltkreis vorgesehen. Der Tastkopf kann die aktuelle Drehwinkelposition des Drehtellers in dieser Ausgestaltung sehr einfach anhand des individuellen Identifikationsschaltkreises bestimmen, der mit dem Sensor ausgelesen wird. Es ist von Vorteil, wenn der Detektor dazu ausgebildet ist, das Auslesen der Vielzahl von Identifikationsschaltkreisen zu verhindern, da in diesem Fall lediglich ein Detektor benötigt wird. In einem bevorzugten Ausführungsbeispiel beinhaltet der Detektor den bereits oben erwähnten Schalter, der in Reihe zu der Vielzahl von Identifikationsschaltkreisen angeordnet ist. Die Ausgestaltung ermöglicht eine zuverlässige Überwachung der Verriegelungsfunktion in jeder Drehwinkelposition und eine kompakte Bauform.

In einer weiteren Ausgestaltung weist der Drehteller eine Vielzahl von Drehtellerrastelementen auf, die die Drehwinkelpositionen definieren, und der zumindest eine Identifikationsschaltkreis besitzt eine Anzahl von elektrischen Kontakten, die radial zu mindestens einem der Drehtellerrastelemente angeordnet sind. Vorzugsweise ist radial zu jedem Drehtellerrastelement ein Paar von elektrischen Kontakten angeordnet, die mit jeweils einem Identifikationsschaltkreis verbunden sind, wobei jeder Identifikationsschaltkreis genau ein Drehtellerrastelement identifiziert. Des Weiteren ist es bevorzugt, wenn am Kupplungsteil ein Kontaktpaar angeordnet ist, das in jeder Drehwinkelposition genau einen Identifikationsschaltkreis über die elektrischen Kontakte ausliest, die diesem Identifikationsschaltkreis zugeordnet sind.

Die Ausgestaltung ermöglicht eine schnelle und sehr zuverlässige Bestimmung jeder definierten Drehwinkelposition. Die radiale Anordnung der elektrischen Kontakte trägt weiterhin zu einer kompakten und übersichtlichen Bauform bei. Außerdem vereinfacht diese Ausgestaltung die bevorzugte Realisierung des Detektors in Form eines elektrisch in Reihe zu allen Identifikationsschaltkreisen angeordneten Schalters.

In einer weiteren Ausgestaltung weist das Kupplungsteil eine Vielzahl von Kupplungstellerrastelementen und einen weiteren Sensor auf, wobei der weitere Sensor dazu ausgebildet ist, einen mechanischen Kontakt zwischen zumindest einem Kupplungstellerrastelement und zumindest einem Drehtellerrastelement zu detektieren. Vorzugsweise ist das Kupplungstellerrastelement als Kugel- oder Walzenpaar ausgebildet, das einen Zwischenraum bildet, in den genau ein Drehtellerrastelement eingreifen kann. Es ist jedoch auch denkbar, dass jedes Drehtellerrastelement ein Kugel- oder Walzenpaar ist, zwischen das genau ein Kupplungstellerrastelement eingreifen kann.

Die Ausgestaltung realisiert einen zweiten unabhängigen Signalweg, der vorteilhaft dazu verwendet werden kann, die Anlage des Drehtellers an dem Kupplungsteil zu detektieren. Der weitere Sensor ersetzt jedoch nicht den oben beschriebenen Detektor, da er für sich genommen keine Aussage in Bezug auf das Verriegelungselement ermöglicht. Allerdings erlaubt der weitere Sensor eine bessere Überwachung der Verriegelungsfunktion, da der Detektor des Drehtellers das oben beschriebene Signal nur dann an den Tastkopf liefern kann, wenn der Drehteller im Bereich des Kupplungsteils angeordnet ist. Der weitere Sensor liefert also eine zusätzliche Information, die vorteilhaft zur Unterscheidung verschiedener Fallkonstellationen dient. Darüber hinaus ermöglicht der weitere Sensor auf einfache Weise festzustellen, ob der Drehteller in einer kinematisch eindeutig definierten Drehwinkelposition an das Kupplungsteil angekoppelt ist, und/oder ob er für eine Drehung aus der kinematischen Lagerung ausgerückt ist.

In einer weiteren Ausgestaltung beinhaltet der Verriegelungsmechanismus zwei - vorzugsweise federbelastete - Schieber, die gegenläufig zueinander verschiebbar sind, um das zumindest eine Verriegelungselement in die Freigabeposition zu bringen.

Zwei gegenläufige Schieber ermöglichen ein einfaches und sicheres Öffnen und Schließen des Verriegelungsmechanismus. Darüber hinaus ist ein Verriegelungsmechanismus mit zumindest zwei gegenläufigen Verriegelungselementen robust und tolerant gegenüber leichten Positionierungenauigkeiten beim Einsetzen des Drehtellers. Solche Ungenauigkeiten werden durch gegenläufige Elemente ausgeglichen. Federbelastete Schieber besitzen den Vorteil, dass sie eine definierte Ruheposition gewährleisten, in der der Drehteller vorzugsweise an dem Haltezapfen verriegelt ist.

Die bevorzugten Schieber besitzen jeweils ein freies Ende, wobei die freien Enden in der Ruheposition diametral zueinander liegen und radial über den Drehtellerrand hinausragen. Diese Ausgestaltung ermöglicht eine einfache manuelle Betätigung und eine gut reproduzierbare maschinelle Betätigung des Verriegelungsmechanismus.

In einer weiteren Ausgestaltung besitzt der Tastkopf ein Rumpfteil, an dem das Kupplungsteil beweglich gelagert ist, und zumindest einen Messkraftgenerator, der dazu ausgebildet ist, eine Bewegung des Kupplungsteils relativ zu dem Rumpfteil zu bewirken.

In dieser Ausgestaltung handelt es sich um einen aktiven Tastkopf mit zumindest einem Messkraftgenerator, der in der Lage ist, das am Kupplungsteil angeordnet Tastwerkzeug in einer definierten Richtung auszulenken bzw. eine definierte Messkraft zu erzeugen, wenn das Tastwerkzeug an einem Messpunkt anliegt. Vorzugsweise besitzt der Tastkopf zumindest drei Messkraftgeneratoren, die das Kupplungsteil in drei zueinander orthogonalen Richtungen auslenken können. Die Ausgestaltung ermöglicht eine sehr genaue Einstellung einer Messkraft und sie vereinfacht eine automatische Bahnregelung beim kontinuierlichen Abscannen eines Messobjekts.

In einer weiteren Ausgestaltung ist am Rumpfteil ein Abrollvorsprung ausgebildet, an dem der Drehteller durch eine Bewegung des Kupplungsteils abrollbar ist.

Diese Ausgestaltung nutzt die in DE 10 2009 008 722.2 beschriebene Idee, um den Drehteller mit Hilfe von Messkraftgeneratoren in eine gewünschte Drehwinkelposition zu bringen. Dementsprechend ist die DE 10 2009 008 722.2 in Bezug auf alle Details dieser Idee hier durch Bezugnahme aufgenommen. Der neue Verriegelungsmechanismus, der mit Hilfe des neuen Detektors überwacht wird, ermöglicht vor allem bei einem solchen Tastkopf eine zuverlässige Befestigung des Drehtellers, und sie vermeidet insbesondere Beschädigungen durch Herabfallen des Tastwerkzeugs beim Drehen des Drehtellers an dem Abrollvorsprung Gerade in dieser Situation erfährt der Drehteller Seitenkräfte, die bei vorhandener, aber unzureichender Befestigung ein Herabfallen bewirken können.

In einer weiteren Ausgestaltung ist der Abrollvorsprung eine Hülse, die weitgehend konzentrisch zu dem Drehteller angeordnet ist. Vorzugsweise ist die Hülse eine Zylinderhülse, die konzentrisch zu einem kreisförmigen Drehteller angeordnet ist.

Diese Ausgestaltung ermöglicht eine sehr kompakte Bauform sowie eine schnelle und positionsunabhängige Drehung des Drehtellers an dem Abrollvorsprung.

In einer weiteren Ausgestaltung ist zwischen dem Drehteller und dem Abrollvorsprung ein Traktionselement angeordnet. In einer bevorzugten Variante ist das Traktionselement ein gummiartiger Ring, der auf dem Außenumfang des Drehtellers angeordnet ist und der die Haft- und Gleitreibung zwischen dem Drehteller und dem Abrollvorsprung erhöht. In einer weiteren Variante beinhaltet das Traktionselement eine schleifpapierartige Oberfläche am Abrollvorsprung und/oder am Außenumfang des Drehtellers. In einer weiteren Variante erzeugt das Traktionselement einen Formschluss zwischen Drehteller und Abrollvorsprung. Beispielsweise kann das Traktionselement eine Verzahnung beinhalten, etwa indem der Drehteller am Außenumfang Außenzähne aufweist, die dazu ausgebildet sind, mit Innenzähnen am Abrollvorsprung zu kämmen.

Ein solches Traktionselement verbessert die Antriebskraft zwischen dem Drehteller und dem Abrollvorsprung. Schlupf wird reduziert, wenn nicht gar vermieden. Daher trägt das Traktionselement dazu bei, den Drehteller schnell und genau in eine gewünschte Drehwinkelposition zu bringen.

In einer weiteren Ausgestaltung ist am Rumpfteil ein Anschlag angeordnet, mit dem der Haltezapfen relativ zu dem Kupplungsteil fixierbar ist.

In den bevorzugten Ausgestaltungen ist der Haltezapfen so an dem Kupplungsteil angeordnet, dass er parallel zu der Drehachse des Drehtellers verschiebbar ist. In einer ersten Position (Rastposition) zieht der Haltezapfen den Drehteller in die bevorzugte kinematische Dreipunktlagerung. In einer zweiten Position (Drehposition) rückt der Haltezapfen den Drehteller aus der kinematischen Lagerung aus, um ein Drehen des Drehtellers zu ermöglichen. Vorzugsweise ist der Zapfen in der Drehposition spielfrei in einem Wälzlager gelagert, um eine leichte Drehung des Drehtellers zu ermöglichen. In der Rastposition ist der Haltezapfen vorzugsweise mit einem Abstand zu dem Lagerelement angeordnet, d.h. er besitzt Spiel innerhalb des Lagerelements, um eine mechanische Klemmung beim Antasten von Messobjekten zu vermeiden.

Der bevorzugte Anschlag besitzt den Vorteil, dass der Haltezapfen sehr einfach mit Hilfe eines Messkraftgenerators relativ zu dem Kupplungsteil bewegt werden kann, indem das Kupplungsteil mit Hilfe des Messkraftgenerators parallel zur Drehachse des Drehtellers verschoben wird, während der Haltezapfen an dem Anschlag fixiert ist. Die Ausgestaltung ermöglicht ein sehr sanftes Aus- und Einrücken des Drehtellers, wobei wiederum in vorteilhafter Weise von einem integrierten Messkraftgenerator Gebrauch gemacht wird. Die Grundidee dieser Ausgestaltung ist in einer weiteren älteren (nachveröffentlichten) deutschen Patentanmeldung der vorliegenden Anmelderin (Anmeldetag 22. April 2010, Aktenzeichen noch nicht bekannt) beschrieben. Auch diese ältere Anmeldung ist hinsichtlich der Details des Anschlags durch Bezugnahme hier aufgenommen.

In einer weiteren Ausgestaltung ist das Kupplungsteil zwischen dem Anschlag und dem Drehteller angeordnet.

Diese Ausgestaltung trägt zu einer besonders kompakten Bauform bei und ermöglicht eine vorteilhafte Kapselung aller Tastkopfkomponenten mit Ausnahme des auswechselbaren Tastwerkzeugs.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Koordinatenmessgerät mit einem Tastkopf gemäß einem Ausführungsbeispiel der Erfindung,
- Fig. 2: eine vereinfachte Darstellung des Tastkopfes mit einer Tastkopfsensorik und einem Messkraftgenerator,
- Fig. 3: ein bevorzugtes Ausführungsbeispiel des Tastkopfes in einer Ansicht auf das Kupplungsteil,
- Fig. 4: den Tastkopf aus Fig. 3 in einer Schnittansicht entlang der Linie IV-IV,
- Fig. 5: ein bevorzugtes Ausführungsbeispiel eines Tastwerkzeuges zum Ankoppeln an das Kupplungsteil aus Fig, 3,
- Fig. 6a und 6b: ein erstes und ein abgewandeltes zweites Ausführungsbeispiel für den Verriegelungsmechanismus des Tastwerkzeuges aus Fig. 5,
- Fig. 7: eine vereinfachte Darstellung des bevorzugten Tastkopfes beim Verdrehen des Tastwerkzeugs, und
- Fig. 8 bis 10: das Kupplungsteil des Tastkopfes aus Fig. 3 und 4 in verschiedenen Betriebspositionen.

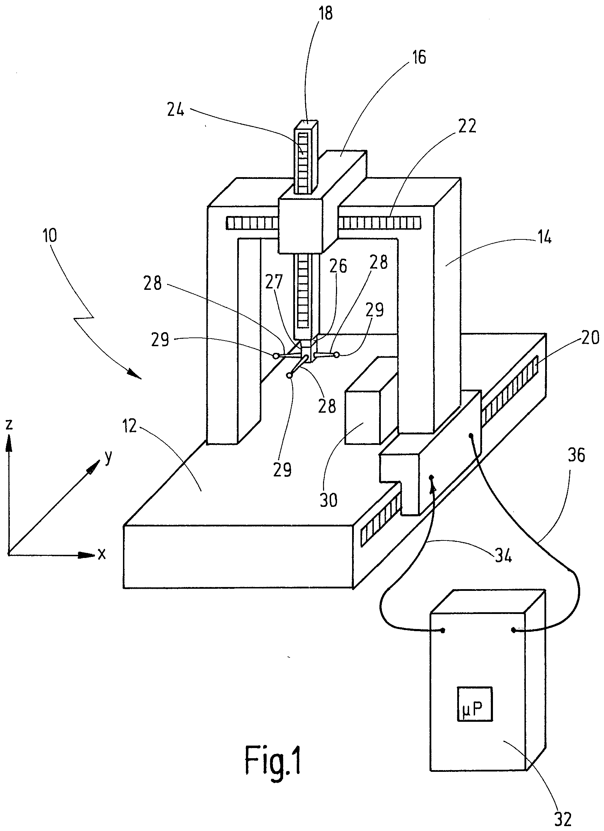

In Fig. 1 ist ein Koordinatenmessgerät mit dem neuen Tastkopf in seiner Gesamtheit mit der Bezugsziffer 10 bezeichnet. Das Koordinatenmessgerät 10 besitzt hier eine Basis 12, auf der ein Portal 14 in Längsrichtung verschieblich angeordnet ist. Die Bewegungsrichtung des Portals 14 relativ zu der Basis 12 wird üblicherweise als y-Achse bezeichnet. Am oberen Querträger des Portals 14 ist ein Schlitten 16 angeordnet, der in Querrichtung verschieblich ist. Die Querrichtung wird üblicherweise als x-Achse bezeichnet. Der Schlitten 16 trägt eine Pinole 18, die in z-Richtung, also senkrecht zu der Basis 12, verfahren werden kann. Mit den Bezugsziffern 20, 22, 24 sind Messeinrichtungen bezeichnet, mit deren Hilfe die Position des Portals 14, des Schlittens 16 und der Pinole 18 bestimmt werden kann. Typischerweise handelt es sich bei den Messeinrichtungen 20, 22, 24 um Glasmaßstäbe, die mit Hilfe geeigneter Sensoren abgelesen werden.

Am unteren freien Ende der Pinole 18 ist ein Tastkopf 26 angeordnet, der ein Tastwerkzeug 27 hält. Das Tastwerkzeug 27 weist hier drei Taststifte 28 auf, die jeweils an ihren freien Enden eine Tastkugel 29 besitzen. Die Kugel dient dazu, einen Messpunkt an einem Messobjekt 30 anzutasten. Mit Hilfe der Messeinrichtungen 20, 22, 24 lässt sich die Position des Tastkopfes 26 innerhalb des Messvolumens beim Antasten des Messpunktes bestimmen. In Abhängigkeit davon kann man dann die Raumkoordinaten des angetasteten Messpunktes bestimmen.

Mit der Bezugsziffer 32 ist eine Auswerte- und Steuereinheit bezeichnet, die über Leitungen 34 und 36 mit den Antrieben und Sensoren am Portal verbunden ist. Die Steuereinheit 32 dient dazu, die motorischen Antriebe für die Bewegungen des Tastkopfes 26 entlang der drei Koordinatenachsen x, y und z anzusteuern. Außerdem liest die Auswerte- und Steuereinheit 32 die Messwerte aus den Messeinrichtungen 20, 22, 24 ein, und sie bestimmt in Abhängigkeit davon und in Abhängigkeit von den Auslenkungen des Tastwerkzeugs 27 die aktuellen Raumkoordinaten des Messpunktes und weitere geometrische Größen des Messobjektes 30.

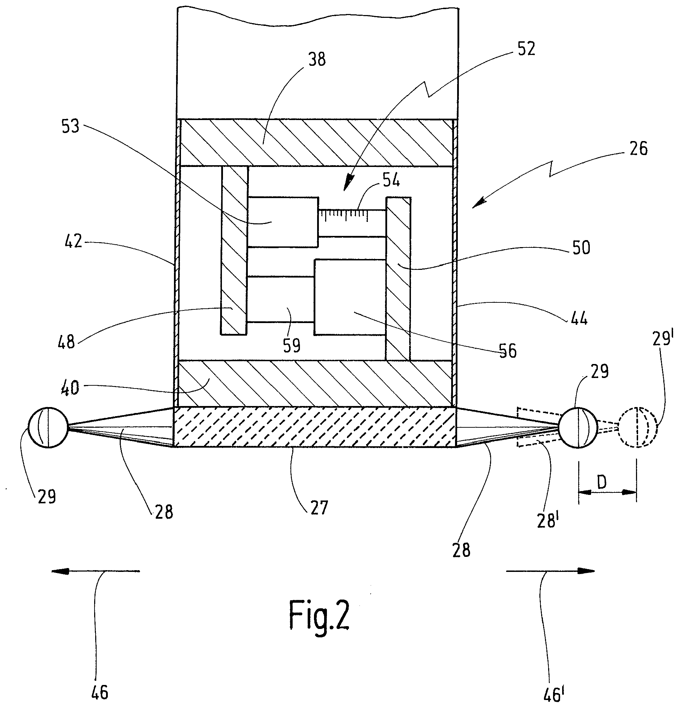

Fig. 2 zeigt anhand einer stark vereinfachten, schematischen Darstellung die grundlegende Funktionsweise des Tastkopfes 26. Der Tastkopf 26 besitzt ein Rumpfteil 38 und ein Kupplungsteil 40, die hier über zwei Blattfedern 42 und 44 miteinander verbunden sind. Die Blattfedern 42, 44 bilden ein Federparallelogramm, das hier eine Bewegung des Kupplungsteils 40 in Richtung des Pfeils 46 (und zurück in Richtung des Pfeils 46') ermöglicht. Damit kann das Tastwerkzeug 27 mit den Taststiften 28 um eine Distanz D aus seiner Ruhelage ausgelenkt werden. Bei den Bezugsziffern 28' und 29' ist einer der Taststifte 28 mit Tastkugel 29 in der ausgelenkten Position gezeigt.

Die Auslenkung des Tastwerkzeuges 27 relativ zu dem Rumpfteil 38 kann die Folge einer Antastung des Messobjektes 30 an einem Messpunkt sein. Vorteilhafterweise wird die Auslenkung des Tastwerkzeuges 27 bei der Bestimmung der Raumkoordinaten berücksichtigt. Darüber hinaus kann die Auslenkung des Tastwerkzeuges 27 in den bevorzugten Ausführungsbeispielen mit Hilfe eines Messkraftgenerators 56 erzeugt werden, wie nachfolgend näher erläutert ist. An dem Rumpfteil 38 und an dem beweglichen Teil 40 ist hier jeweils ein Schenkel 48, 50 angeordnet. Die Schenkel 48, 50 stehen hier parallel zu den Blattfedern 42, 44. Zwischen den Schenkeln 48, 50 sind ein Auslenkungsdetektor 52 (hier mit einer Skala 54 dargestellt) und der Messkraftgenerator 56 angeordnet. Der Auslenkungsdetektor 52 weist hier eine Messspule 53 in Form einer Tauchspule auf. Als Auslenkungsdetektor 52 sind alternativ oder ergänzend ein Hall-Sensor, ein piezoresistiver Sensor oder ein anderer Sensor denkbar, mit dessen Hilfe die räumliche Auslenkung des Tastwerkzeuges 27 relativ zu dem Rumpfteil 38 (genauer: die Auslenkung des Federparallelogramms, das von den Blattfedern 42, 44 gebildet wird) bestimmt werden kann. Der Messkraftgenerator 56 ist hier ebenfalls als Tauchspule ausgebildet. Mit dessen Hilfe können die beiden Schenkel 42 und 50 zusammengezogen oder auseinandergedrückt werden, indem ein Kern 59 mit Hilfe eines in der Spule erzeugten Magnetfeldes angezogen oder abgestoßen wird.

In der stark vereinfachten Darstellung in Fig. 2 ermöglicht der Tastkopf 26 lediglich eine Auslenkung des Tastwerkzeuges 27 in Richtung des Pfeils 46. Den einschlägigen Fachleuten ist allerdings klar, dass ein solcher Tastkopf 26 typischerweise eine entsprechende Auslenkung in zwei weiteren, orthogonalen Raumrichtungen ermöglicht. Dies kann beispielsweise mit weiteren Federparallelogrammen und/oder mit einer Membranfeder realisiert sein. Die Erfindung ist jedoch nicht auf diesen speziellen Tastkopf beschränkt und kann auch mit anderen Tastköpfen realisiert werden, welche ein Rumpfteil 38 sowie ein relativ dazu bewegliches Kupplungsteil 40 besitzen.

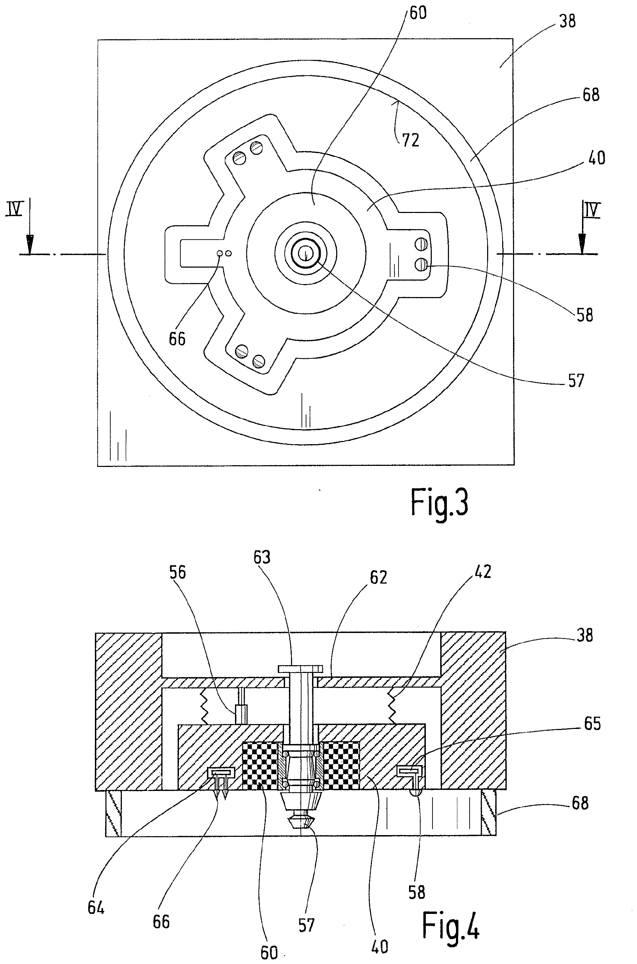

Fig. 3 zeigt ein bevorzugtes Ausführungsbeispiel des Tastkopfes 26 aus Fig. 2 in einer Ansicht von unten (ohne Tastwerkzeug 27). Fig. 4 zeigt einen vereinfachten Schnitt des Tastkopfes aus Fig. 3 entlang einer Schnittlinie IV-IV.

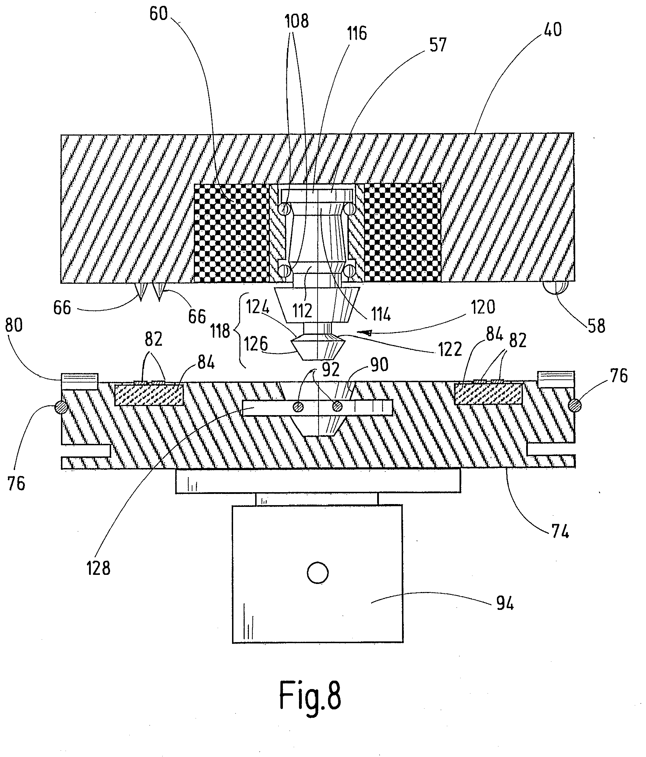

Das Rumpfteil 38 hält das Kupplungsteil 40, das an dem Rumpfteil 38 vorzugsweise in drei orthogonalen Raumrichtungen beweglich ist. Der Einfachheit halber sind in Fig. 4 lediglich zwei Federelemente 42 gezeigt, die die drei orthogonalen Bewegungsrichtungen ermöglichen. Das Kupplungsteil 40 weist hier einen Zapfen 57 auf, der in dem Kupplungsteil 40 senkrecht beweglich geführt ist (wird weiter unten anhand Fig. 8 bis 10 näher erläutert). Im Randbereich des Kupplungsteils 40 sind in Umfangsrichtung drei Paare von Rastkugeln 58 gleichmäßig verteilt angeordnet. Die Anordnung ist so gewählt, dass die Rastkugelpaare jeweils den gleichen radialen Abstand zu dem Zapfen 57 besitzen. Das Kupplungsteil 40 besitzt ferner einen Magneten 60, hier beispielsweise in Form eines ringförmigen Elektromagneten. Alternativ kann der Magnet ein Permanentmagnet sein, der mit einem zusätzlichen Elektromagneten verstärkt oder abgeschwächt wird. Der Magnet 60 ist hier konzentrisch zu dem Zapfen 57 an dem Kupplungsteil 40 angeordnet. Darüber hinaus besitzt das Kupplungsteil 40 hier einen Sensor 64 mit zwei Kontakten 66 und einen Sensor 65. Am Rumpfteil 38 ist ein Abrollvorsprung 68 in Form einer Zylinderhülse mit einem Innenmantel 72 ausgebildet. Der Abrollvorsprung 68 erstreckt sich hier konzentrisch zu dem Zapfen 57.

Wie bereits bei der Erläuterung von Fig. 2 erwähnt wurde, kann die Position des Kupplungsteils 40 relativ zu dem Rumpfteil 38 mit Hilfe von Messkraftgeneratoren 56 verändert werden. Dies wird üblicherweise verwendet, um eine definierte Messkraft beim Antasten des Messobjekts zu erzeugen. Um darüber hinaus eine vorteilhafte Bewegung des Zapfens 57 relativ zu dem Kupplungsteil 40 zu ermöglichen, ist in dem bevorzugten Ausführungsbeispiel ein Anschlag 62 vorgesehen, der hier an dem Rumpfteil 38 ausgebildet ist oder zumindest mit diesem starr verbunden ist. Der Anschlag 62 wirkt mit einem Teller 63 zusammen, der am oberen Ende des Zapfens 57 ausgebildet ist. In Fig. 4 steht das obere Ende des Zapfens 57 nach oben über den Anschlag 62 hinaus und der Teller 63 ist oberhalb von dem Anschlag 62 angeordnet. Wenn das Kupplungsteil 40 mit Hilfe des Messkraftgenerators 56 nach unten gedrückt wird, folgt der Zapfen 57 dieser Bewegung, bis der Teller 63 von oben gegen den Anschlag 62 stößt. Ab dieser Position wird der Zapfen 57 gegen eine weitere Bewegung nach unten blockiert. Das Kupplungsteil 40 kann demgegenüber mit Hilfe des Messkraftgenerators 56 weiter nach unten gedrückt werden. Von dem Moment an, in dem der Zapfen 57 über den Teller 63 an dem Anschlag 62 blockiert ist, bewegt der Messkraftgenerator nur noch das Kupplungsteil 40 nach unten, nicht mehr den Zapfen 57. Anders ausgedrückt schiebt der Messkraftgenerator 56 das Kupplungsteil 40 relativ zu dem Zapfen 57 nach unten. Da der Zapfen 57 mit seinem unteren freien Ende dazu ausgebildet ist, ein Tastwerkzeug zu halten (wird anhand der Fig. 8 bis 10 näher erläutert), kann man mit Hilfe des Messkraftgenerators 56 und des Anschlags 62 den Abstand zwischen dem Kupplungsteil 40 und dem Tastwerkzeug 27 variieren und insbesondere verringern. Dies wird in Ausführungsbeispielen des neuen Koordinatenmessgerätes vorteilhaft dazu verwendet, um das Kupplungsteil 40 "sanft" an das Tastwerkzeug 27 heranzubewegen und anschließend mit dem Magneten 60 zu befestigen.

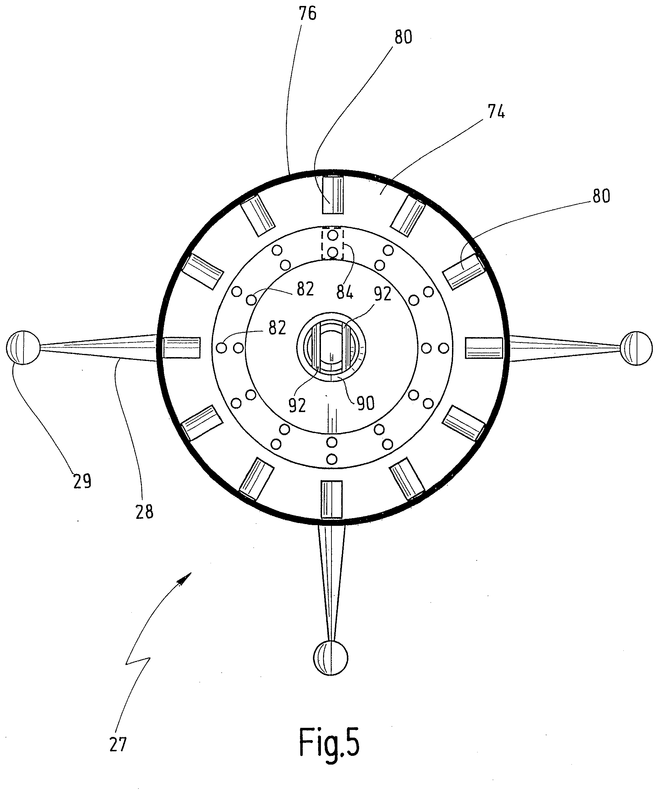

Fig. 5 zeigt ein bevorzugtes Ausführungsbeispiel des Tastwerkzeugs 27 in einer Draufsicht auf die Schnittstelle, mit der das Tastwerkzeug an dem Kupplungsteil 40 angekoppelt wird. Das Tastwerkzeug 27 besitzt einen Drehteller 74, der hier kreisförmig ausgebildet ist. Am Außenumfang des Drehtellers 74 ist ein Traktionselement angeordnet 76, hier beispielhaft in Form eines O-Rings. Anstelle eines O-Rings ist in anderen Ausführungsbeispielen ein Flachriemen aus einem gummielastischen Material auf dem Außenrand des Drehtellers angeordnet. Der Drehteller 74 besitzt hier mehrere Rastwalzen 80, die jeweils radial ausgerichtet sind. Die Rastwalzen 80 sind in Umfangsrichtung des Drehtellers 74 gleichmäßig verteilt. Radial innen zu jeder Rastwalze 80 sind zwei Kontakte 82 angeordnet. Die Kontakte 82 liegen hier in radialer Richtung des Drehtellers 74 hintereinander, wodurch sich eine in Umfangsrichtung verteilte Anordnung von radialen Kontaktpaaren ergibt. Jedes Paar ist Teil eines Ausrichtungsbestimmungselements 84, das mit dem Sensor 64 am Kupplungsteil 40 zusammenwirkt (vgl. Fig. 8).

In den bevorzugten Ausführungsbeispielen beinhaltet jedes Ausrichtungsbestimmungselement 84 einen Identifikationsschaltkreis, beispielsweise in Form eines Speicherchips, in dem eine individuelle Kodierung gespeichert ist. Jeder Identifikationsschaltkreis repräsentiert daher eine eindeutige Information. Der Sensor 64 kann über die Kontakte 66 jeweils nur einen Identifikationsschaltkreis 84 auslesen und anhand der ausgelesenen Kodierung die Drehwinkelposition des Tastwerkzeugs relativ zum Kupplungsteil bestimmen. Bevorzugt enthält zumindest ein Identifikationsschaltkreis weitere Informationen, die die Identität und/oder Eigenschaften des Tastwerkzeuges 27 als Ganzes repräsentieren.

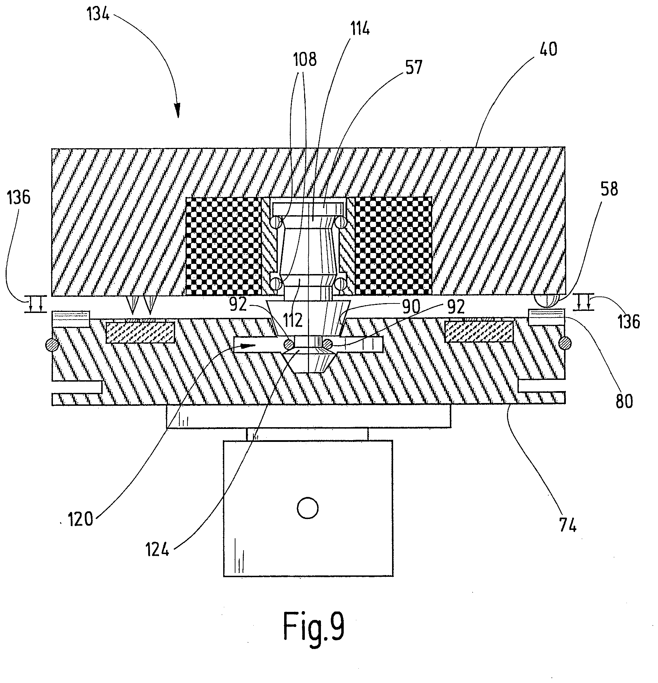

Im Mittelpunkt des Drehtellers 74 ist eine Aufnahme 90 in Form einer kreisförmigen Öffnung angeordnet. In der Aufnahme 90 sind hier zwei Verriegelungselemente 92 angeordnet, mit denen der Drehteller 74 an dem unteren freien Ende des Zapfens 57 befestigt werden kann. In dem Ausführungsbeispiel in Fig. 5 sind die Verriegelungselemente 92 zwei Stäbe, die dazu ausgebildet sind, in eine Nut am unteren freien Ende des Zapfens 57 einzugreifen (vgl. Fig. 9).

Das Tastwerkzeug 27 trägt hier die drei Taststifte 28 entsprechend Fig. 1. Die Taststifte 28 sind unterhalb des Drehtellers 74 angeordnet. Dabei ist die Ausbildung des Tastwerkzeuges nicht auf die in Fig. 5 gezeigte Weise beschränkt. Es ist möglich, Taststifte unterschiedlicher Länge und/oder Geometrien zu verwenden. Auch die Anzahl der verwendeten Taststifte und/oder die Anzahl der Rastwalzen können von dem dargestellten Ausführungsbeispiel abweichen.

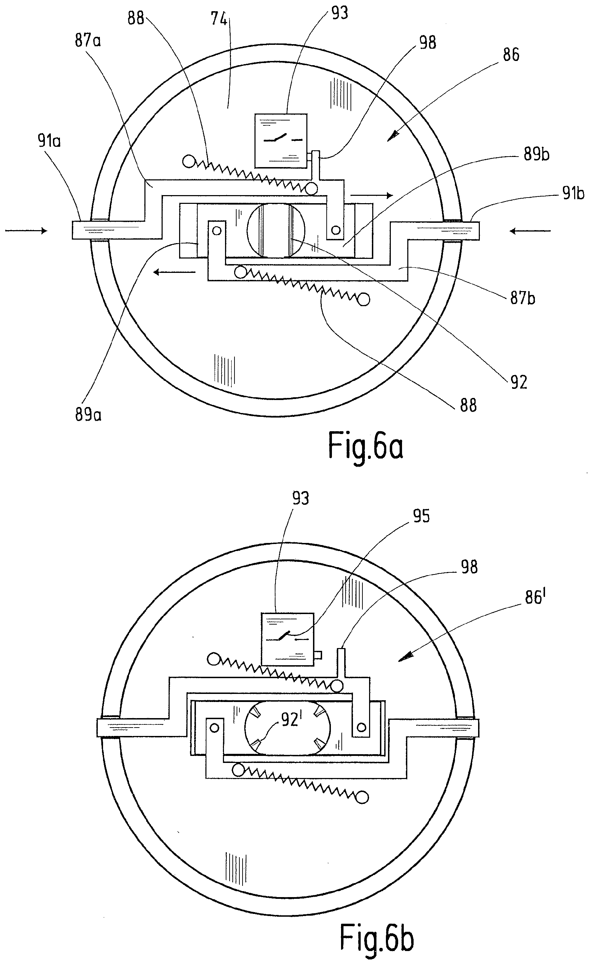

In Fig. 6a ist ein Verriegelungsmechanismus 86 gezeigt, mit dem die Verriegelungselemente 92 geöffnet oder geschlossen werden können, um den Drehteller 74 an dem Zapfen 57 zu befestigen. Der Verriegelungsmechanismus 86 ist in den bevorzugten Ausführungsbeispielen in dem Drehteller 74 integriert. Vorzugsweise ist der Verriegelungsmechanismus 86 zwischen der in Fig. 5 gezeigten Oberseite des Drehtellers 74 und dem Taststift 28 angeordnet.

Der Verriegelungsmechanismus 86 besitzt in dem bevorzugten Ausführungsbeispiel zwei gegenläufig zueinander bewegliche Schieber 87a, 87b. Jeder Schieber 87a, 87b ist über ein Federelement 88 in eine Ruheposition vorgespannt. In den bevorzugten Ausführungsbeispielen spannen die Federelemente 88 die Schieber 87 in einer Ruheposition vor, in der die Verriegelungselement 92 den Drehteller 74 an dem Zapfen 57 festklemmen. Im bevorzugten Ausführungsbeispiel ist jeder Schieber 87 mit jeweils einem Klemmstück 89a, 89b verbunden. An den Klemmstücken 89a, 89b sind die Verriegelungselemente 92 angeordnet.

Durch gegenläufiges Zusammendrücken der Schieber 87a, 87b in Richtung der in Fig. 6a gezeigten Pfeile können die Klemmstücke 89 auseinandergedrückt werden. Loslassen der Schieber 87 führt dazu, dass die Federelemente 88 die Verriegelungselement 92 wieder zusammenschieben. Zum Öffnen des Verriegelungsmechanismus 86 besitzt jeder Schieber 87 ein freies Ende 91, das über den Außenumfang des Drehtellers 74 nach außen hervorsteht. In den bevorzugten Ausführungsbeispielen liegen die freien Enden 91a, 91b der Schieber 87a, 87b diametral zueinander am Außenumfang des Drehtellers 74..

Fig. 6b zeigt den Verriegelungsmechanismus 86' in einer Betriebsstellung, in der die Verriegelungselemente 92 in einer Freigabeposition sind, d.h. der Verriegelungsmechanismus 86' ist geöffnet. Demgegenüber zeigt Fig. 6a den Verriegelungsmechanismus 86 im geschlossenen Zustand, d.h. die Verriegelungselemente 92 sind in ihrer Verriegelungsposition.

Außerdem ist in Fig. 6b eine Variante mit Verriegelungselementen 92' dargestellt. Die Verriegelungselemente 92' sind zahnartige Vorsprünge an den Klemmstücken 89, die radial in eine Nut am Zapfen 57 eingreifen. Demgegenüber sind die Verriegelungselemente 92 gemäß Fig. 6a stabförmige Elemente, die sich tangential in die Nut legen (vgl. Fig. 9). In einigen Ausführungsbeispielen sind die zahnartigen Vorsprünge 92' bevorzugt, da sie bei einer Kollision des Tastwerkzeugs mit dem Messobjekt leichter abbrechen und somit eine Notentriegelung des Tastwerkzeugs ermöglichen. Demgegenüber sind die stabförmigen Verriegelungselemente 92 gemäß Fig. 6a bevorzugt, wenn ein besonders sicherer Halt des Tastwerkzeugs am Tastkopf gewünscht ist.

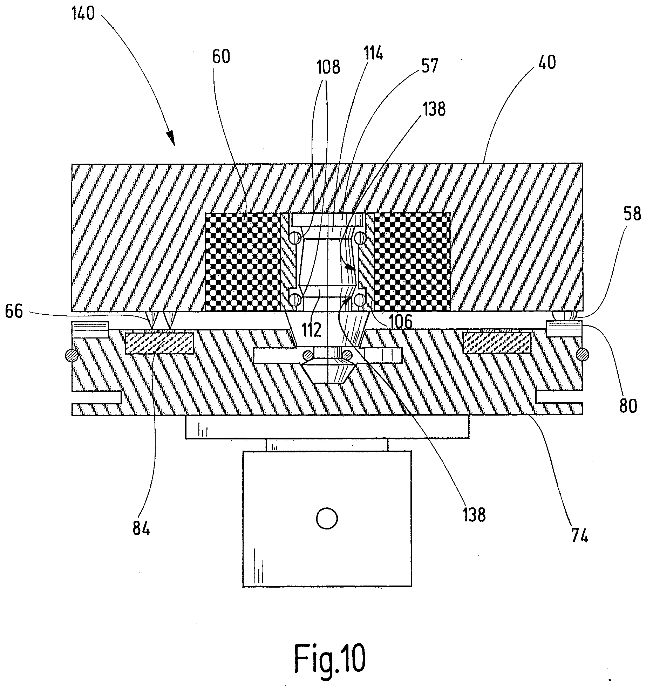

In den bevorzugten Ausführungsbeispielen beinhaltet der Verriegelungsmechanismus 86 ein Detektor 93, der dazu ausgebildet ist, die Verriegelungsposition und/oder die Freigabeposition der Verriegelungselemente 92 zu detektieren. In den Ausführungsbeispielen gemäß Fig. 6 ist der Detektor 93 ein Mikroschalter mit einem Schaltkontakt 95, der in Serie zu allen Kontaktpaaren 92 des Drehtellers 74 angeordnet ist. Der Schaltkontakt 95 kann einmechanischer Kontakt oder ein elektronischer Schalter, etwa in Form eines Transistors sein. Die Schaltstellung des Schalters 93 wird über den Schieber 87a beeinflusst. In der in Fig. 6a gezeigten Position berührt eine Nase 89 des Schiebers 87a den Schalter 93. Durch die Nase 98 wird der Schaltkontakt 95 geschlossen. In dieser Position kann der Sensor 64 im Tastkopf 27 denjenigen Identifikationsschaltkreis 84 auslesen, dessen Kontakte 82 mit den Kontakten 66 am Kupplungsteil in Berührung stehen (vgl. Fig. 4 und Fig. 10). In der in Fig. 6b gezeigten Stellung ist die Nase 98 demgegenüber von dem Schalter 93 entfernt. Der Schaltkontakt 95 ist folglich geöffnet und der Sensor 64 kann keinen der Identifikationsschaltkreise 84 auslesen. Das Nicht-Vorhandensein eines Identifikationssignals von einem der Identifikationsschaltkreise 84 ist ein Signal, mit dem der Detektor 93 anzeigt, dass der Verriegelungsmechanismus 86 nicht ordnungsgemäß geschlossen ist.

Anders ausgedrückt liefert der Detektor 93 nur dann ein Signal von einem der Identifikationsschaltkreise 84 an den Sensor 64, wenn ein Drehteller 74 an den Kontakten 66 anliegt und der Verriegelungsmechanismus 86 geschlossen ist.

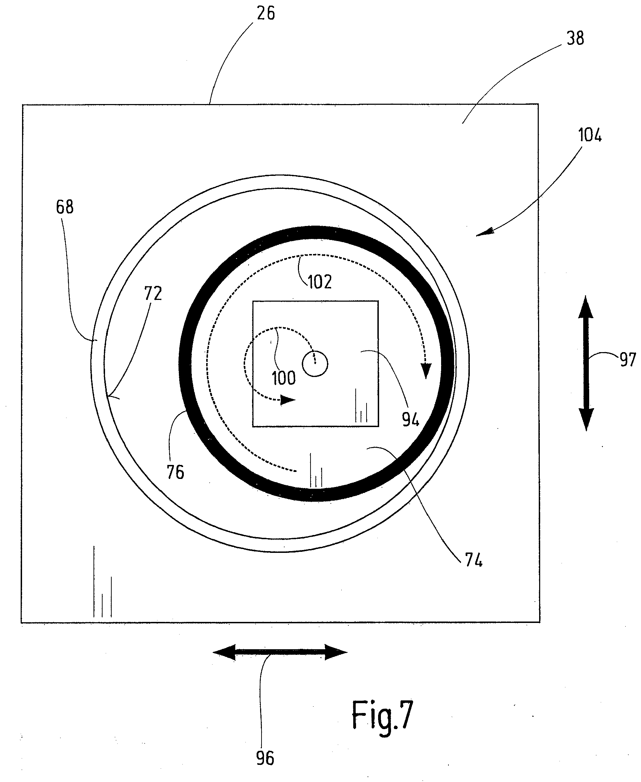

Fig. 7 zeigt den Tastkopf 26 aus Fig. 3 oder 4 sowie den Drehteller 74 aus Fig. 5 in einer vereinfachten Darstellung von unten. Der Tastkopf 26 ist hier lediglich mit der Außenkontur des Rumpfteils 38 und dem Abrollvorsprung 68 gezeigt. Der Drehteller 74 ist hier mit einem Aufnahmeblock 94 für Taststifte 28 und dem Traktionselement 76 gezeigt. Zum Bewegen des Drehtellers 74 relativ zum Tastkopf werden hier die Messkraftgeneratoren 56 verwendet, die Bewegungen in Richtung der Doppelpfeile 96 und 97 erzeugen. Die Richtungen 96 und 97 sind orthogonal zueinander und entsprechend hier den Bewegungsrichtungen x und y des Koordinatenmessgerätes 10. Mit Hilfe der Bewegungen 96, 97 ist es möglich, den Drehteller 74 innerhalb des Abrollvorsprungs 68 zu bewegen. In der dargestellten Position liegt der Drehteller 74 mit dem Traktionselement 76 an dem Innenmantel 72 an und bildet einen Reibschluss an dem Abrollvorsprung 68. Alternativ könnte der Drehteller 74 auch einen Formschluss mit dem Abrollvorsprung 68 eingehen. Beispielsweise könnte der Drehteller 74 am Außenumfang wie ein Zahnrad ausgebildet sein, das mit passenden Zähnen an dem Abrollvorsprung kämmt.

Durch eine kreisförmige Bewegung (Pfeil 100) des Drehtellers 74, die hier konzentrisch zum Abrollvorsprung 68 erfolgt, wird ein Verdrehen des Drehtellers 74 in Richtung des Pfeils 102 erreicht. Die kreisförmige Bewegung wird durch entsprechende Steuerung der Messkraftgeneratoren entlang der Pfeile 96 und 97 erzeugt. Die Bewegung 102 wird so lange ausgeführt, bis der Taststift eine gewünschte Drehposition erreicht. Anschließend kann der Drehteller 74 in seine zentrale Ruheposition zurückbewegt werden. Vorzugsweise liegt die Ruheposition zentrisch zum Abrollvorsprung 68. Aufgrund der unterschiedlichen Radien des Abrollvorsprungs und des Traktionselementes 76 bilden diese Elemente ein Reibgetriebe 104, das bei entsprechender Dimensionierung die Drehgeschwindigkeit des Drehtellers 74 bestimmt.

Fig. 8 zeigt eine Schnittansicht des Kupplungsteils 40 und des Drehtellers 74 in einer ersten Betriebsposition. Der Einfachheit halber ist der Zapfen 57 hier nicht in seiner ganzen Länge dargestellt. Insbesondere fehlt hier das obere Ende mit dem Teller 63, der an dem Anschlag 62 (Fig. 4) zurückgehalten werden kann, um das Kupplungsteil 40 relativ zu dem Zapfen 57 zu bewegen.

Das Kupplungsteil 40 weist den Ringmagneten 60 auf, der eine Haltevorrichtung 106 konzentrisch umgibt. Die Haltevorrichtung 106 besitzt hier zwei Lagerelemente 108 in Form von Kugellagern, die ringförmig ausgeführt und konzentrisch zu dem Zapfen 57 angeordnet sind.

Innerhalb der Haltevorrichtung 106 ist der Zapfen 57 angeordnet. Er besitzt zwei konusförmige Abschnitte 112 und 114. In der dargestellten Position des Zapfens 57 liegen die konusförmigen Abschnitte 112, 114 spielfrei an den Lagerelementen 108 an. Das innerhalb des Kupplungsteils 40 liegende Ende des Zentrierzapfens 57 bildet ein Haltevorsprung 116, der den Zentrierzapfen 57 innerhalb der Haltevorrichtung 106 gegen hohe Zugkräfte sichert. Der außerhalb des Kupplungsteils 40 liegende Abschnitt 118 ist im Wesentlichen konusförmig ausgebildet. Der Abschnitt 118 weist eine Nut 120 auf, welche in Umfangsrichtung des Zentrierzapfens 57 ausgebildet ist. Die zum Kupplungsteil 40 zeigende Wand 122 der Nut 120 bildet einen weiteren konusförmigen Abschnitt 124, welcher entgegengesetzt zu den konusförmigen Abschnitten 112 und 114 orientiert ist. Das freie Ende des Zentrierzapfens 57 bildet einen weiterer konusförmiger Abschnitt 126, dessen Orientierung der Orientierung der konusförmigen Abschnitte 112, 114 entspricht. Ferner sind hier eine der Rastkugeln 58 sowie die Kontakte 66 zu sehen.

Der Drehteller 74 trägt das Traktionselement 76. Auf der dem Kupplungsteil 40 zugewandten Seite des Drehtellers 74 sind zwei der Rastwalzen 80 sowie zwei zugehörige Identifikationsschaltkreise 84 dargestellt. Die Aufnahme 90 ist im Wesentlichen konusförmig ausgebildet, so dass ein sicherer Sitz des Zapfens 57 innerhalb der Aufnahme 90 und eine automatische Zentrierung gewährleistet sind. Innerhalb der Aufnahme 90 ist eine zylinderförmige Aussparung 128, innerhalb der die Verriegelungselemente 92 bewegt werden können. Der Drehteller 74 hält den Aufnahmeblock 94. Taststifte 28 sind aus Gründen der Übersichtlichkeit nicht dargestellt.

Fig. 9 zeigt das Kupplungsteil 40, den Zapfen 57 und den Drehteller 74 in einer zweiten Betriebsposition. Im Unterschied zur Fig. 8 ist der Drehteller 74 hier an dem Zapfen 57 befestigt. Die Verriegelungselemente 92 sind in ihrer Verriegelungsposition. Der Zapfen 5 ist in die Aufnahme 90 eingesteckt, so dass die Verriegelungselemente 92 in die Nut 120 eingreifen. Somit bildet der konusförmige Abschnitt 124 eine Anlage für die Verriegelungselemente 92, und die Nut 120 bildet mit den Verriegelungselementen 92 einen Verschluss.

In der in Fig. 9 dargestellten Position des Drehtellers 74 verbleibt ein Abstand zwischen der Rastkugel 58 und der nächstliegenden Rastwalze 80. Daher ist es möglich, den Drehteller 74 mit dem Zentrierzapfen 57 zu drehen. Dabei liegen die konusförmigen Abschnitte 112 und 114 spielfrei an den Lagerelementen 108 an. Somit befindet sich der Zapfen 57 in einer Drehposition 134, die ein Drehen des Drehtellers 74 ermöglicht.

Durch eine axiale Bewegung des Kupplungsteils 40 in Richtung der Bewegungspfeile 136 (also in Längsrichtung des Zapfens und damit parallel zur Drehachse des Drehtellers 74) kann man den Drehteller 74 aus der in Fig. 9 gezeigten Position in eine zum Kupplungsteil 40 nahen Position bringen. Vorteilhaft wird das Kupplungsteil 40 mit Hilfe des Messkraftgenerators 56 so weit nach unten von dem Rumpfteil 38 weg gedrückt, dass der Teller 63 (Fig. 4) am oberen Ende des Zapfens 57 gegen den Anschlag 62 fährt und seine Position relativ zu dem Rumpfteil 38 ab dann nicht weiter verändert. Das Kupplungsteil 40 wird mit Hilfe des Messkraftgenerators 56 hingegen noch weiter nach unten gedrückt und bewegt sich somit auf den Drehteller 74 am unteren Ende des Zapfens 57 zu.

Fig. 10 zeigt das Kupplungsteil 40, den Zapfen 57 und den Drehteller 74 aus Fig. 8 und 9 in einer entsprechenden dritten Betriebsposition. Außerdem ist nun der Elektromagnet 60 magnetisiert, um den Drehteller 74 in der zum Kupplungsteil 40 nahen Position zu fixieren. In dieser nahen Position wirken die Rastkugeln 58 mit der nächstliegenden Rastwalze 80 zusammen und bilden eine kinematisch bestimmte Dreipunktlagerung. Der Kontakt der Rastkugeln 58 mit der Rastwalze 80 wird vorteilhaft mit Hilfe des Sensors 65 (Fig. 4) detektiert.

Dadurch dass der Zapfen 57 relativ zu dem Kupplungsteil 40 nach oben geschoben wurde, sind die konusförmigen Abschnitte 112 und 114 nun mit einem Abstand 138 zu den Lagerelementen 108 angeordnet. Aufgrund dieser Abstände 138 besitzt der Zapfen 57 nun innerhalb der Haltevorrichtung 106 Spiel. Auf diese Weise wird verhindert, dass durch den Zapfen 57 unerwünschte Gegenkräfte erzeugt werden, die gegen die Ausrichtung des Drehtellers 74 durch die Rastung arbeiten. Somit befindet sich der Zapfen 57 in einer definierten Rastposition 140.

## Patentansprüche

1. Tastwerkzeug zur Verwendung mit einem Tastkopf für ein Koordinatenmessgerät (10), das zum Bestimmen von Raumkoordinaten an einem Messobjekt (30) vorgesehen ist, mit zumindest einem Taststift (28) zum Antasten eines Messobjekts (30) und mit einem Drehteller (74), der dazu ausgebildet ist, über einen Haltezapfen (57) des Tastkopfes in einer von mehreren definierten Drehwinkelpositionen an den Tastkopf angekoppelt zu werden, wobei der Drehteller (74) einen Verriegelungsmechanismus (86) mit zumindest einem verstellbaren Verriegelungselement (92) aufweist, wobei das Verriegelungselement (92) eine Verriegelungsposition besitzt, in der es den Drehteller (74) an dem Haltezapfen (57) befestigt, und zumindest eine Freigabeposition, in der es den Haltezapfen (57) freigibt, **dadurch gekennzeichnet, dass** der Drehteller (74) einen Detektor (93) aufweist, der ein Signal erzeugt, das für die Verriegelungsposition und/oder die Freigabeposition repräsentativ ist.

2. Tastkopf für ein Koordinatenmessgerät (10) zum Bestimmen von Raumkoordinaten an einem Messobjekt (30), mit einem Kupplungsteil (40) mit einem Haltezapfen (57), an dem ein Tastwerkzeug (27) nach Anspruch 1 lösbar angeordnet ist.

3. Tastkopf nach Anspruch 2, **dadurch gekennzeichnet, dass** der Drehteller (74) zumindest einen Identifikationsschaltkreis (84) besitzt und dass das Kupplungsteil (40) einen Sensor (64) zum Auslesen des zumindest einen Identifikationsschaltkreises (84) besitzt.

4. Tastkopf nach Anspruch 3, **dadurch gekennzeichnet, dass** der Detektor (93) dazu ausgebildet ist, das Auslesen des Identifikationsschaltkreises (84) durch den Sensor (64) in Abhängigkeit von der Verriegelungsposition und/oder der Freigabeposition zu verhindern.

5. Tastkopf nach Anspruch 4, **dadurch gekennzeichnet, dass** der Detektor (93) einen elektrischen Schalter beinhaltet, der elektrisch in Reihe zu dem zumindest einen Identifikationsschaltkreis (84) angeordnet ist.

6. Tastkopf nach einem der Ansprüche 3 bis 5, **dadurch gekennzeichnet, dass** der Drehteller (74) eine Vielzahl von Identifikationsschaltkreisen (84) besitzt, wobei jeweils ein Identifikationsschaltkreis (84) für eine der definierten Drehwinkelpositionen repräsentativ ist, und wobei der Detektor (93) dazu ausgebildet ist, das Auslesen der Identifikationsschaltkreise (84) durch den Sensor (64) in Abhängigkeit von der Verriegelungsposition und/oder der Freigabeposition zu verhindern.

7. Tastkopf nach einem der Ansprüche 3 bis 6, **dadurch gekennzeichnet, dass** der Drehteller (74) eine Vielzahl von Drehtellerrastelementen (80) aufweist, die die Drehwinkelpositionen definieren, und dass der zumindest eine Identifikationsschaltkreis (84) eine Anzahl von elektrischen Kontakten (82) besitzt, die radial zu mindestens einem der Drehtellerrastelemente (80) angeordnet sind.

8. Tastkopf nach Anspruch 7, **dadurch gekennzeichnet, dass** das Kupplungsteil (40) eine Vielzahl von Kupplungstellerrastelementen (58) und einen weiteren Sensor (65) aufweist, wobei der weitere Sensor (65) dazu ausgebildet ist, einen mechanischen Kontakt zwischen zumindest einem Kupplungstellerrastelement (58) und zumindest einem Drehtellerrastelement (80) zu detektieren.

9. Tastkopf nach einem der Ansprüche 2 bis 8, **dadurch gekennzeichnet, dass** der Verriegelungsmechanismus zwei Schieber (87) beinhaltet, die gegenläufig zueinander verschiebbar sind, um das zumindest eine Verriegelungselement (92) in die Freigabeposition zu bringen.

10. Tastkopf nach einem der Ansprüche 2 bis 9, **gekennzeichnet durch** ein Rumpfteil (38), an dem das Kupplungsteil (40) beweglich gelagert ist, und zumindest einen Messkraftgenerator (56), der dazu ausgebildet ist, eine Bewegung des Kupplungsteils (40) relativ zu dem Rumpfteil (38) zu bewirken.

11. Tastkopf nach Anspruch 10, **dadurch gekennzeichnet, dass** am Rumpfteil (38) ein Abrollvorsprung (68) ausgebildet ist, an dem der Drehteller (74) durch eine Bewegung des Kupplungsteils (40) abrollbar ist.

12. Tastkopf nach Anspruch 11, **dadurch gekennzeichnet, dass** der Abrollvorsprung (68) eine Hülse ist, die weitgehend konzentrisch zu dem Drehteller (74) angeordnet ist.

13. Tastkopf nach Anspruch 11 oder 12, **gekennzeichnet durch** ein Traktionselement (76), das zwischen dem Drehteller (74) und dem Abrollvorsprung (68) angeordnet ist.

14. Tastkopf nach einem der Ansprüche 10 bis 13, **dadurch gekennzeichnet, dass** am Rumpfteil (38) ein Anschlag (62) angeordnet ist, mit dem der Haltezapfen (57) relativ zu dem Kupplungsteil (40) fixierbar ist.

15. Tastkopf nach Anspruch 14, **dadurch gekennzeichnet, dass** das Kupplungsteil (40) zwischen dem Anschlag (62) und dem Drehteller (74) angeordnet ist.

## Claims

1. Sampling tool for use with a sampling head for a coordinate measuring device (10) provided for determining spatial coordinates on a measurement object (30), comprising at least one sampling pin (28) for probing a measurement object (30) and comprising a rotary plate (74), which is formed so as to be coupled to the sampling head by means of a retaining axle (57) of the sampling head in one of a plurality of defined rotation angle positions, wherein the rotary plate (74) comprises a latching mechanism (86) having at least one adjustable latching element (92), the latching element (92) having a latching position in which it fastens the rotary plate (74) on the retaining axle (57), and at least one release position in which it releases the retaining axle (57), **characterized in that** the rotary plate (74) comprises a detector (93) which generates a signal which is representative of the latching position and/or the release position.

2. Sampling head for a coordinate measuring device (10) for determining spatial coordinates on a measurement object (30), comprising a coupling part (40) having a retaining axle (57), on which a sampling tool (27) according to Claim 1 is detachably arranged.

3. Sampling head according to Claim 2, **characterized in that** the rotary plate (74) has at least one identification circuit (84), and **in that** the coupling part (40) has a sensor (64) for reading the at least one identification circuit (84).

4. Sampling head according to Claim 3, **characterized in that** the detector (93) is formed so as to prevent the identification circuit (84) from being read by the sensor (64) as a function of the latching position and/or the release position.

5. Sampling head according to Claim 4, **characterized in that** the detector (93) contains an electrical switch, which is arranged electrically in series with the at least one identification circuit (84).

6. Sampling head according to one of Claims 3 to 5, **characterized in that** the rotary plate (74) has a multiplicity of identification circuits (84), each identification circuit (84) being representative of one of the defined rotation angle positions, and the detector (93) being formed so as to prevent the identification circuit (84) from being read by the sensor (64) as a function of the latching position and/or the release position.

7. Sampling head according to one of Claims 3 to 6, **characterized in that** the rotary plate (74) has a multiplicity of rotary plate latching elements (80), which define the rotation angle positions, and **in that** the at least one identification circuit (84) has a number of electrical contacts (82) which are arranged radially with respect to at least one of the rotary plate latching elements (80).

8. Sampling head according to Claim 7, **characterized in that** the coupling part (40) comprises a multiplicity of coupling plate latching elements (58) and a further sensor (65), the further sensor (65) being formed in order to detect mechanical contact between at least one coupling plate latching element (58) and at least one rotary plate latching element (80).

9. Sampling head according to one of Claims 2 to 8, **characterized in that** the latching mechanism contains two sliding members (87), which can be displaced counter to one another in order to bring the at least one latching element (92) into the release position.

10. Sampling head according to one of Claims 2 to 9, **characterized by** a body part (38) on which the coupling part (40) is mounted in a mobile fashion, and at least one measurement force generator (56) which is formed in order to cause movement of the coupling part (40) relative to the body part (38).

11. Sampling head according to Claim 10, **characterized in that** a pivot projection (68), on which the rotary plate (74) can be rolled by movement of the coupling part (40), is formed on the body part (38).

12. Sampling head according to Claim 11, **characterized in that** the pivot projection (68) is a sleeve, which is arranged essentially concentrically with the rotary plate (74).

13. Sampling head according to Claim 11 or 12, **characterized by** a traction element (76), which is arranged between the rotary plate (74) and the pivot projection (68).

14. Sampling head according to one of Claims 10 to 13, **characterized in that** a stop (62), by which the retaining axle (57) can be fixed relative to the coupling part (40), is arranged on the body part (38).

15. Sampling head according to Claim 14, **characterized in that** the coupling part (40) is arranged between the stop (62) and the rotary plate (74).

## Revendications

1. Outil à palpeur à utiliser avec une sonde pour un appareil de mesure de coordonnées (10), qui est prévu pour la détermination de coordonnées dans l'espace sur un objet à mesurer (30), avec au moins un palpeur (28) destiné à palper un objet à mesurer (30) et avec un plateau tournant (74), qui est configuré de façon à être couplé à la sonde au moyen d'un tourillon de maintien (57) de la sonde dans une de plusieurs positions angulaires de rotation définies, dans lequel le plateau tournant (74) présente un mécanisme de verrouillage (86) avec au moins un élément de verrouillage déplaçable (92), dans lequel l'élément de verrouillage (92) possède une position de verrouillage, dans laquelle il fixe le plateau tournant (74) au tourillon de maintien (57), et au moins une position de libération, dans laquelle il libère le tourillon de maintien (57), **caractérisé en ce que** le plateau tournant (74) présente un détecteur (93), qui produit un signal qui est représentatif de la position de verrouillage et/ou de la position de libération.

2. Sonde pour un appareil de mesure de coordonnées (10) pour la détermination de coordonnées dans l'espace sur un objet à mesurer (30), avec une partie de couplage (40) avec un tourillon de maintien (57), sur lequel un outil à palpeur (27) selon la revendication 1 est disposé de façon séparable.

3. Sonde selon la revendication 2, **caractérisée en ce que** le plateau tournant (74) possède au moins un circuit d'identification (84) et **en ce que** la partie de couplage (40) comporte un capteur (64) permettant de lire ledit au moins un circuit d'identification (84).

4. Sonde selon la revendication 3, **caractérisée en ce que** le détecteur (93) est configuré de façon à empêcher la lecture du circuit d'identification (84) par le capteur (64) en fonction de la position de verrouillage et/ou de la position de libération.

5. Sonde selon la revendication 4, **caractérisée en ce que** le détecteur (93) comporte un interrupteur électrique, qui est connecté électriquement en série avec ledit au moins un circuit d'identification (84).

6. Sonde selon l'une quelconque des revendications 3 à 5, **caractérisée en ce que** le plateau tournant (74) comporte une multiplicité de circuits d'identification (84), dans laquelle un circuit d'identification (84) est respectivement représentatif d'une des positions angulaires de rotation définies, et dans laquelle le détecteur (93) est configuré de façon à empêcher la lecture des circuits d'identification (84) par le capteur (64) en fonction de la position de verrouillage et/ou de la position de libération.

7. Sonde selon l'une quelconque des revendications 3 à 6, **caractérisée en ce que** le plateau tournant (74) présente une multiplicité d'éléments d'encliquetage du plateau tournant (80), qui définissent les positions angulaires de rotation, et **en ce que** ledit au moins un circuit d'identification (84) comporte un nombre de contacts électriques (82), qui sont disposés radialement par rapport à au moins un des éléments d'encliquetage du plateau tournant (80).

8. Sonde selon la revendication 7, **caractérisée en ce que** la partie de couplage (40) présente une multiplicité d'éléments d'encliquetage du plateau de couplage (58) et un autre capteur (65), dans laquelle l'autre capteur (65) est configuré de façon à détecter un contact mécanique entre au moins un élément d'encliquetage du plateau de couplage (58) et au moins un élément d'encliquetage du plateau tournant (80).

9. Sonde selon l'une quelconque des revendications 2 à 8, **caractérisée en ce que** le mécanisme de verrouillage comporte deux curseurs (87), qui sont déplaçables en sens contraire l'un par rapport à l'autre, afin d'amener ledit au moins un élément de verrouillage (92) dans la position de libération.

10. Sonde selon l'une quelconque des revendications 2 à 9, **caractérisée par** une partie de tronc (38), sur laquelle la partie de couplage (40) est montée de façon mobile, et au moins un générateur de force de mesure (56), qui est configuré de façon à provoquer un mouvement de la partie de couplage (40) par rapport à la partie de tronc (38).

11. Sonde selon la revendication 10, **caractérisée en ce qu'**une saillie de roulement (68) est formée sur la partie de tronc (38), sur laquelle le plateau tournant (74) peut rouler au moyen d'un mouvement de la partie de couplage (40).

12. Sonde selon la revendication 11, **caractérisée en ce que** la saillie de roulement (68) est une douille, qui est disposée de façon largement concentrique au plateau tournant (74).

13. Sonde selon la revendication 11 ou 12, **caractérisée par** un élément de traction (76), qui est disposé entre le plateau tournant (74) et la saillie de roulement (68).

14. Sonde selon l'une quelconque des revendications 10 à 13, **caractérisée en ce qu'**une butée (62) est disposée sur la partie de tronc (38), avec laquelle le tourillon de maintien (57) peut être fixé par rapport à la partie de couplage (40).

15. Sonde selon la revendication 14, **caractérisée en ce que** la partie de couplage (40) est disposée entre la butée (62) et le plateau tournant (74).
